# EUROPEAN PATENT APPLICATION

(11) **EP 1 150 193 A1**
(43) Date of publication of application: **31.10.2001**
(21) Application number: 00201536.0
(22) Date of filing: 28.04.2000
(51) Int. Cl.: G05B 19/418

(54) **A method for converting information related to the hardware/software configuration of a distributed control system**

(71) Applicant: ABB Research Ltd., 8050 Zürich (CH)
(72) Inventor: Fay, Alexander, 69221 Dossenheim (DE); Kirmair, Stefan, 69120 Heidelberg (DE); Merker, Stephan, 68723 Schwetzingen (DE); Villa, Valerio, 22020 Gironico (CO) (IT)
(74) Representative: Giavarini, Francesco

(57) **Abstract**

The present invention related to a method for converting first information (10) having a first format provided with a first syntax and with a first semantics for describing the hardware/software configuration of a first distributed control system, into second information (11) having a second format provided with a second syntax and with a second semantics for describing the hardware/software configuration of a second distributed control system.

## Description

The present invention relates to a method for converting information related to the hardware/software (HW/SW) configuration of a distributed control system (DCS).

More particularly, the present invention relates to a method for converting first information having a certain format for describing a first DCS HW/SW configuration, into second information having another format for describing a second DCS HW/SW configuration.

Distributed control systems are largely used in the state of the art with the purpose of controlling industrial processes. Particularly, distributed control systems have been conceived with the purpose of coping with the intrinsic distributed nature of said industrial processes, through a physical distribution of control units, which can communicate and exchange data/information.

A DCS can process the data/information acquired from the process and can determine its physical behaviour by means of controllers, which can interface to the process.

Any DCS is typically described by information (data, specifications, program documentation and the like) regarding its particular HW/SW configuration. This information typically comprises:
- information regarding the number, the type and the configuration of the controllers included in the DCS; and/or
- information regarding the number, the type and the configuration of the input/output (I/O) boards connected to the controllers; and/or
- information regarding the number, the type and the configuration of the specific devices, which are used for establishing a communication between the controllers; and/or
- information regarding the number, the type and the configuration of the devices, which are used for supervising the controllers; and/or
- information regarding the behaviour of the controllers: this information generally comprises the programs that are run by the DCS controllers and other requirements concerning, for example, the timing of said programs; and/or
- information tags, which are useful for identifying the various elements of a DCS.

As mentioned above, the information for describing a DCS HW/SW configuration is characterised by a proper format, which is provided with a proper syntax and with a proper semantics. The term "syntax" and the term "semantics" respectively mean a set of codification rules and a set of functional relationships and rules, characterising an information format.

As technology proceeds, a DCS might become obsolete or, more generally, it might arise the need of controlling a certain industrial process with a different DCS, provided with more powerful hardware and software means.

In this case, it is necessary to make provision for stopping the process operation, installing and configuring the new DCS.

In order to minimise the DCS upgrade costs, the information related to the HW/SW configuration of the old DCS is generally reused. This fact implies to reuse technical solutions that have already been tested during the years and that, therefore, ensure a high level of reliability for the process control.

Obviously, these technical solutions could certainly be improved but, at this point, the effort for upgrading the old DCS is certainly reduced if compared with the effort that would be needed for generating "ex novo" the information regarding the HW/SW configuration of the new DCS.

Unfortunately, although the process behaviour remains the same, due to the fact that the DCS is physically changed, there is only a little chance of reusing the information related to the HW/SW configuration of the old DCS, as it is.

The incompatibility between the new and the old DCS HW/SW configuration forces the engineers to reprocess the information regarding the old DCS HW/SW configuration, so as to being able to reconfigure the new DCS.

In practice, the information regarding the old HW/SW configuration is converted into information, which is useful for describing the HW/SW configuration of the new DCS. A traditional approach for performing this information conversion is to use mapping tables, which allow establishing logic links between the elements of the old DCS and the elements of the new DCS. In practice, these mapping tables represent a guide, which allows creating the elements of the new DCS configuration, basing on the elements of the old DCS configuration.

This traditional approach suffers from several drawbacks.

In fact, the conversion of the information is generally realised in a manual fashion. Even if the use of the mentioned mapping tables certainly represents a relief in the conversion process, the common practice has shown that the requested manual work implies significant negative consequences in terms of consistency and completeness of the information conversion.

Moreover, the activity of manually and repetitively interacting with said mapping tables might be a tremendous source of trivial mistakes which, in most cases, can be checked with great difficulty. This fact can imply negative consequences when the new DCS is installed.

The probability of making trivial mistakes is further increased by the fact that the amount of information to translate may actually be, in many cases, very huge. In fact, it should be considered that a DCS system of normal size generally comprises several controllers, thousands of signals to exchange and thousands of function blocks.

Therefore, a big amount of time is needed for performing the information conversion: this fact impacts negatively the costs for upgrading the DCS system.

In order to try to solve these drawbacks, some methods of the state of the art make use of computerised tools that aim at speeding up the conversion operations.

These computerised tools generally aim at the conversion of the information regarding the input/output configuration of single elements of the old DCS or, very often, aim at the translation of the software programs that are run by said single elements of the old DCS.

In practice, such computerised tools can be considered as partially embedding the mapping tables that have been mentioned above.

Although these methods certainly relieve engineers from part of the conversion work amount it is not possible to consider them as a satisfactory solution for the technical problems above described.

In fact, a DCS is characterised by the presence of a large amount of hidden logical links, between the elements of its HW/SW configuration. Said links can pertain to very different aspects of the DCS and are essential for a good operation of the DCS.

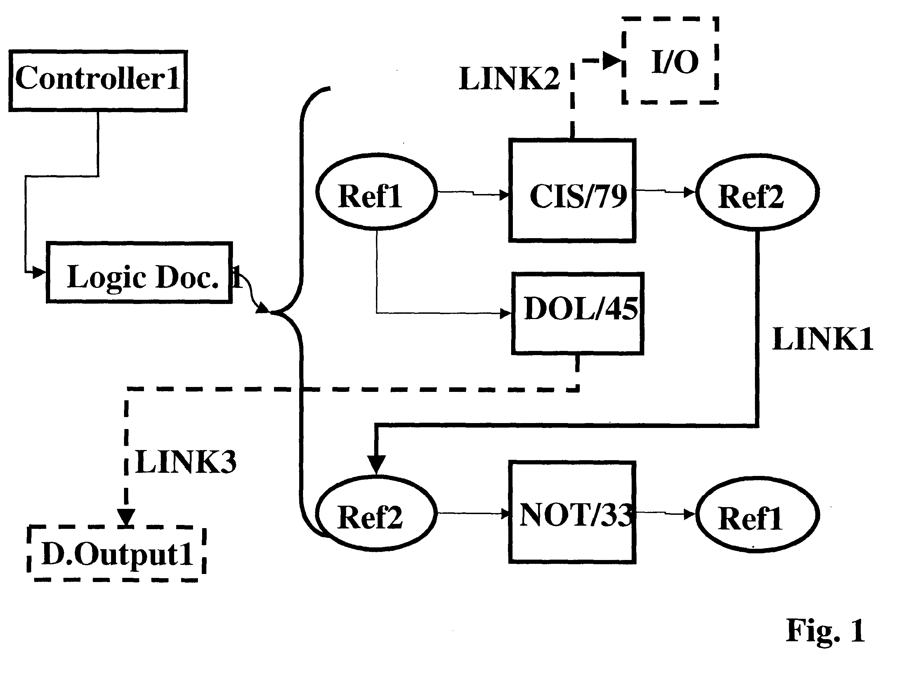

In order to understand better this concept, reference should be made to figure 1, which illustrates a piece of information representing a small portion of the HW/SW configuration of a DCS of the state of the art.

In figure 1, it is represented a controller, which comprises the functional logic blocks "CIS/79", "NOT/33" and "DOL/45" (the names are proposed only for the purpose of example). As it appears from figure 1, visible communication links between said two blocks exist (see the line referenced as "LINK1" and the dashed block "I/O"). But, the presence of the functional block "CIS/79" implies the existence of an I/O board having some analog/digital inputs/outputs (see the dashed line referenced as "LINK2" and the dashed block "I/O"). Moreover, the presence of the functional block "DOL/45" implies the existence of a digital output towards a communication network (see the dashed line referenced as "LINK3" and the dashed block "D. Output1")

So, there are other hidden links (in this case LINK2 and LINK3), whose presence necessarily derives from the type of functional blocks that have been used.

Although these links are not represented in the piece of information represented in figure 1, they are implicitly hidden and they are equally important for ensuring the correct functionality of the controller.

Consequently, it appears evident that the task of maintaining the consistency of said hidden links, during the conversion process, is critical.

Unfortunately, the methods of the state of the art can hardly accomplish this task, due to the fact their purposes are very often intrinsically restricted to particular elements the DCS HW/SW configuration.

For a better understanding, reference can be made, for example, to the US patent N° 5,512,469. In this patent, a method is proposed for converting the information related to the hardware configuration and the control program of a first programmable logic controller (PLC) into the information related to the to the hardware configuration and the control program of a second PLC.

Although this method is embedded in a computerised tool, as proposed in the mentioned patent, the loss of logical links between different control functions implemented by the PLC can hardly be avoided. In fact, all the hidden links related to different elements of the DCS in which the PLC is included (e.g. between different PLCs or between the PLC and other different controllers) might get lost without any chance to retrieve them.

Neither, this problem can be solved simply using a large computerised architecture which performs a juxtaposition of different computerised tools relying on different DCS elements, because the nature and the presence of said links strictly depend on the characteristics of the DCS, which is necessary to update.

Therefore, a cumbersome amount of manual work is still needed, at least for recovering the hidden links that are characteristic of each DCS HW/SW configuration.

This fact means that the mentioned drawbacks are still relevant and basically unsolved, in the common practice.

Another relevant drawback of the conversion methods of the state of the art is represented by the fact that the conversion of the information is generally performed in a "monolithic" manner.

This fact implies that the syntax and the semantics related to the format of the information are converted substantially in a single stage. Due to the fact that, very often, syntax and semantics are strongly interwoven, this operation is often very difficult and needs different skills for planning, designing and maintaining the syntax and semantics conversion.

The main aim of the present invention is to provide a method, which allows performing the conversion of the information related to a DCS HW/SW configuration, reducing the drawbacks that have been described above to a negligible level.

Within this scope, an object of the present invention is to provide a method, which allows performing a non-monolithic conversion of the information related to a DCS HW/SW configuration, in which the syntax conversion and the semantics conversion are executed separately.

Another object of the present invention is to provide a method, which allows performing a non-monolithic conversion of the information related to a DCS HW/SW configuration in a consistent and complete manner, minimising the need of manual rework.

Another object of the present invention is to provide a method, which allows performing the conversion of the information related to a DCS HW/SW configuration, reducing to a negligible level the loss of the logical hidden connections linking different elements of the DCS.

Another object of the present invention is to provide a method, which allows performing the conversion of the information related to a DCS HW/SW configuration of different DCS systems, independently of their specific structure and configuration.

Not the least object of the present invention is to provide a method, which can be relatively easy embedded on a computerised environment, so as to allow obtaining at least a partially automatic execution of said method.

Thus, the present invention provides a method for converting first information having a first format is provided with a first syntax and with a first semantics for describing the hardware/software configuration of a first distributed control system. The method according to the present invention converts said first information into second information having a second format provided with a second syntax and with a second semantics for describing the hardware/software configuration of a second distributed control system. The method according to the present invention comprises the phases of:
a) converting said first information into third information having a third format provided with a third syntax and with a third semantics for describing the hardware/software configuration of a virtual distributed control system, said virtual distributed control system having hardware/software configuration independent of the hardware/software configuration of said first distributed control system and said second distributed control system; and
b) converting said third information into said second information.

The method according to the present invention, is characterised in that:
- said phase a) comprises a plurality of steps for converting separately said first syntax into said third syntax and said first semantics into said third semantics respectively; and/or
- said phase b) comprises a plurality of steps for converting said third semantics into said second semantics and said third syntax into said second syntax respectively.

The method, according to the present invention allows achieving the main aim of the present invention.

The method, according to present invention, performs an indirect conversion of the information related to the hardware/software configuration of the old DCS.

The method, according to the present invention, first converts, at the phase a), the information related to the HW/SW configuration of the old DCS into information having a "neutral " format. In fact, said information can describe a virtual DCS, having HW/SW configuration independent of the HW/SW configuration of the old and the new DCS.

Subsequently, the method, according to the present invention, converts, at the phase b), said information having a neutral format into information having a format, which depends on the new DCS configuration.

All the elements of the old DCS configuration are, in practice, represented, during the conversion process, in a "neutral" format, which is provided with a proper syntax and with a proper semantics.

It should be noticed that also the visible and hidden links among the DCS elements can be considered "per se" as DCS elements and can be represented in said neutral format. So, they can be converted and handled, minimising the possibilities of missing them during the conversion process.

In this manner, the conversion process pertains to the information related to the old DCS configuration, taken as a whole.

Therefore, the consistency and the reliability of the conversion are necessarily guaranteed and the need of a human intervention is effectively minimised. In fact, the user's manual work is, at this point, restricted to the activity of interacting with the computerised environment, through which the method, according to the present invention, can be embedded.

This fact implies a relevant reduction of the upgrading costs of the DCS.

Moreover, thanks to the main characteristic of the mentioned phases a) and b), the conversion process is realised in a non-monolithic manner. In fact, both phase a) and b) comprise a plurality of steps that convert separately the information syntax and the semantics, at any information transition.

Therefore, the conversion process is logically split in relatively small and subsequent tasks that can be managed by the user in a quite comfortable manner. Moreover, the practical implementation of the method, according to the present invention, results much easier with higher levels of reliability and consistency.

For a better understanding of the present invention, reference may be made to the detailed description reported hereinafter, taken in conjunction with the accompanying drawings in which:
figure 1 represents a block diagram, which schematically illustrates a piece of information representing a portion of the harware/software configuration of a DCS of the state of the art;
figure 2 represents a block diagram, which schematically illustrates the sequence of phases included in the method according to the present invention.
figure 3 represents a block diagram, which schematically illustrates a first transition of the piece of information illustrated in figure 1, during the conversion process;
figure 4 represents a block diagram, which schematically illustrates a second transition of the piece of information illustrated in figure 1, during the conversion process.

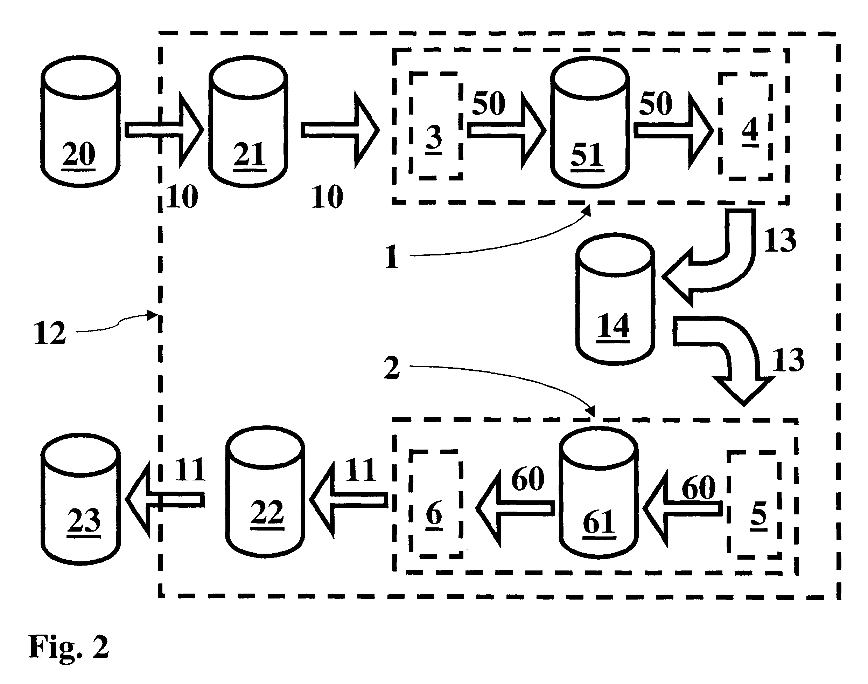

Referring now to figure 2, the method according to the present invention executes the conversion of first information 10, which has a first format provided with a first syntax and with a first semantics for describing the HW/SW configuration of a first DCS (not shown). The information 10 is converted into second information 11, which has a second format provided with a second syntax and with a second semantics for describing the HW/SW configuration of a second DCS (not shown).

The method according to the present invention comprises the phase a) of converting the first information 10 into a third information 13, having a third format provided with a third syntax and with a third semantics for describing the HW/SW configuration of a virtual DCS. Said virtual DCS has a HW/SW configuration, which is independent of the HW/SW configuration of said first and second distributed control systems.

Further, the method according to the present invention comprises the phase b) of converting the third information 13 into the second information 11.

The phase a) of the method, according to the present invention, comprises a plurality of steps for converting the first syntax of the information 10 into the third syntax of the information 13 and the first semantics of the information 10 into the third semantics of the information 13. In practice the phase a) comprises a plurality of steps that perform the conversion, in a first period of time, of the first syntax of the information 10 into the third syntax of the information 13. Then, in a second period of time separated from said first period of time, said plurality of steps performs the conversion of the first semantics of the information 10 into the third semantics of the information 13. Preferably, said second period of time is subsequent to said first period of time.

Also the phase b) comprises a plurality of steps for converting separately the third semantics of the information 13 into the second semantics of the information 11 and the third syntax of the information 13 into the second syntax of the information 11.

Accordingly to the phase a), the phase b) comprises a plurality of steps that perform the conversion, in a third period of time, of the third semantics of the information 13 into the second semantics of the information 11. Further, in a fourth period of time separated from said third period of time, said plurality of steps perform the conversion of the third syntax of the information 13 into the second syntax of the information 11. Preferably, said fourth period of time is subsequent to said third period of time.

The embodiments of the method, according to the present invention, described hereinafter will illustrate more clearly the concepts introduced above.

In a preferred embodiment, the phase a) comprises the step a.1) of importing the first information 10 into a computerised environment 12 (dashed line of figure 2).

The phase a) preferably comprises also the step a.2) of converting (dotted block 3) the first information 10 into a first intermediate information 50 having a first intermediate format, which is provided with said third syntax and with said first semantics. At step a.3) the first intermediate information 50 can be stored into first intermediate storage means 51 (for example a database), included in the computerised environment 12.

Subsequently, at step a.4) the first intermediate information 50 can be acquired from the storage means 51 and, at step a.5) converted (dotted block 4) into the third information 13. Finally, at step a.6), the third information 13 is stored into first storage means 14 (for example a database), included in the computerised environment 12.

The embodiment of the phase a), which has been described, illustrates clearly the main features that characterise the phase a) itself.

The steps a.1), a.2), a.3), a.4), a.5), a.6) represent a preferred first plurality of steps, which converts separately the first syntax of the first information 10 into the third syntax of the third information 13. Said plurality of steps, converts also the first semantics of the first information 10 into the third semantics of the third information 13.

The steps a.2) and a.5) can be easily executed in separated periods of time and preferably the step a.2) is executed in a first period of time, which comes before the second period of time in which the step a.5 is executed.

As it has been described above, the third information 13 has a third format for describing the HW/SW configuration of a virtual DCS (not shown), which is independent from the HW/SW configuration of said first and second distributed control systems.

In practice, the third information 13 is characterised by a format, which is substantially "neutral" with respect of the HW/SW configurations of the first DCS and of the second DCS.

This fact allows achieving a separation between the "source" (the HW/SW configuration of the first DCS) and the "target" (the HW/SW configuration of the second DCS) of the information flow. As mentioned above, the advantages of this approach are quite remarkable. In fact, all the elements of the HW/SW configuration of the first DCS, including the described hidden and visible logical links, can be logically split and converted separately as independent elements. Moreover, the method, according to the present invention, can be easily applied to different kinds of DCS, without any relevant effort for its implementation.

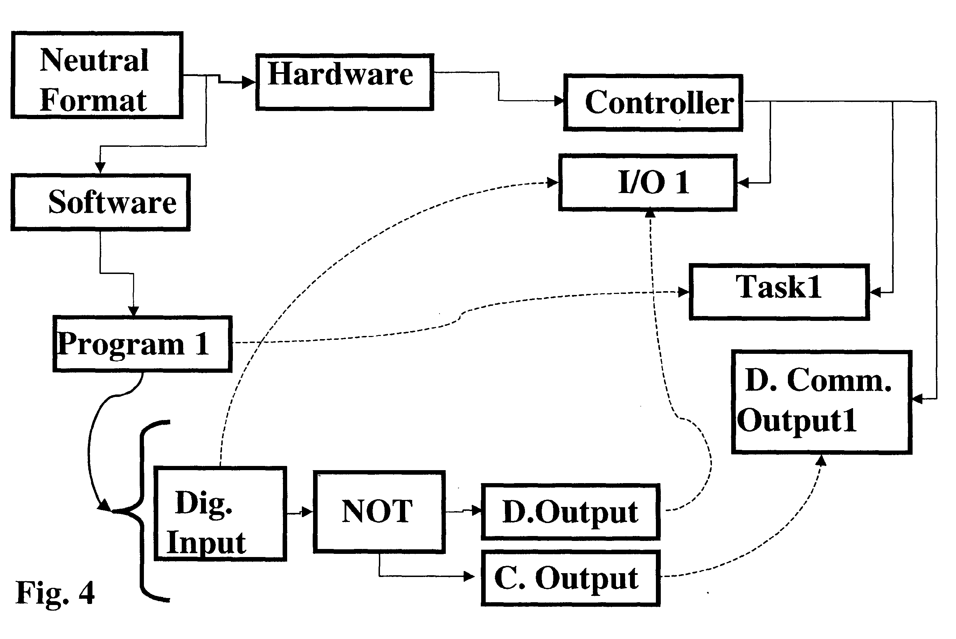

The representation of the HW/SW configuration of the virtual DCS can be obtained in various manners. In a preferred embodiment of the method, according to the present invention, the third information 13 describes the HW/SW configuration of a virtual DCS through the combination of different sets of information. Each set of information comprises pieces of information that are related to non-overlapping aspects of the hardware/software configuration of the virtual DCS. Referring to the figure 4, some examples of said non overlapping pieces of information are represented by the blocks that depend on a first main block, which is named as "hardware" and by the blocks laying under a second main block, which is named as "software".

The HW/SW configuration of the virtual DCS is therefore described combining sets of information, which are substantially "orthogonal". In this manner, also the implicit relationships, hidden in the HW/SW configuration of the first DCS, can be easily represented and, therefore, converted reducing to negligible levels the probability of missing information.

This fact means that, referring again to the example of figures 1 and 4, all the hidden links that were implicitly included in a represented piece of first information 10 (in figure 1 the mentioned LINK2 and LINK3) can be retrieved and split. Furthermore, they can be represented, according to said third format of the third information 13, as separated elements, as it is possible to notice in figure 4 for the blocks named as "I/O1" and named as "D.Comm. Output1".

Making now reference to figures 1, 3 and 4, it is also possible to understand the advantages of the sequence of steps included in the phase a), when applied to the first information 10.

A piece of said first information 10 (a controller) has been introduced in figure 1.

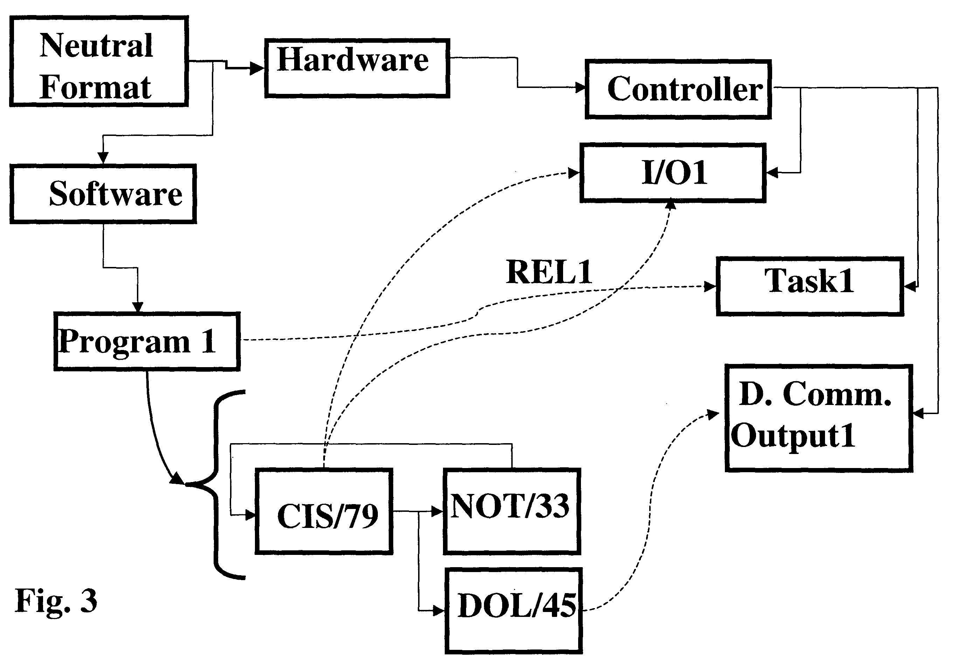

The piece of first information 10 describing the controller of figure 1 is first subjected to a mere conversion of the syntax. The figure 3 represents the results of this syntax conversion. In practice, in figure 3, a piece of the first intermediate information 50 representing the same HW/SW configuration item (the controller) is illustrated. As it is possible to notice, the mere syntax conversion retrieves the links, which wer hidden in the blocks named as "CIS/79" and "DOL/45". Moreover, all the logic cross-references (see for example the dashed line REL1) are solved. It is important to notice that the functional blocks named as "CIS/79", "DOL/45" and "NOT/33" are not converted but remain almost identical (there is only a simple merge in the logic functional block representation). The figure 4 represents the results of the complete conversion process, when also the semantics conversion is performed. This means that figure 4 illustrates a piece of the third information 13 representing the same HW/SW configuration item (the controller).

As it is possible to notice, the semantics conversion implies the conversion of the logic functional blocks used by said first format, which were useful for the first DCS HW/SW configuration (see blocks named as "CIS/79, "NOT/33", "DOL/45"). Said blocks are converted into corresponding elements of said third format (see blocks named as "Dig. Input", "NOT", "D.Output", "C. Output"). This process implies, in practice, a rearrangement of the first intermediate information 50 (change/deletion/replacement of functionally corresponding elements), due to the fact that the syntax conversion has already been performed.

As it is possible to understand, the whole conversion process, thanks to the logical and the temporal separation of the syntax and semantics conversion, is certainly much easier to manage.

Referring again to figure 2, according to a further preferred embodiment of the present invention, said step a.1) of the phase a) can comprise the following sub-steps:
- acquiring the first information 10 from second storage means 20 that are included in first computerised tools (not shown) used for engineering and configuring the first distributed control system; and
- storing the first information 10 into third storage means 21 that are included in the computerised environment 12; and
- acquiring the first information 10 from said third storage means 21.

In practice, the sub-steps that have just been described, provide a direct acquisition of information 10 from a computerised system, which is used for engineering and configuring the first DCS. This embodiment, which can be easily implemented through a suitable computerised interface, is particularly advantageous because it allows importing information, remarkably reducing the needed amount of human work for making available the information 10 to the subsequent steps/phases of the method according to the present invention.

In a preferred embodiment of the method according to the present invention, the phase b) comprises the step b.1) of acquiring the third information 13 from said first storage means 14 and the step b.2) of converting (dotted block 5) the third information 13 into a second intermediate information 60. The second intermediate information 60 has a second intermediate format, which is provided with said third syntax and with said second semantics. The phase b) can also comprise a step b.3), in which the first intermediate information 60 is stored into first intermediate storage means 61 (for example a database), included in the computerised environment 12.

Subsequently, at step b.4) the second intermediate information 60 can be acquired from the storage means 61 (for example a database) and, at step b.5) converted (dotted block 6) into the second information 11.

Finally, the phase b) can comprise the step b.6) of exporting the second information 11 out of the computerised environment 12.

This preferred embodiment of the phase b) appears to be symmetrical with respect of the preferred embodiment of the phase a) that has been described above.

In fact, the steps of phase b), which have just been described, represent a preferred second plurality of steps, which converts separately the third syntax of the third information 13 into the second syntax of the second information 11. Said plurality of steps converts also the third semantics of the third information 13 into the second semantics of the second information 11.

As it is possible to notice, the steps b.2) and b.5) can be easily executed in separated periods of time and preferably the step b.2) is executed in a third period of time, which comes before a fourth period of time, in which the step b.5 is executed.

In a preferred embodiment, the step b.6) comprises a preferred sequence of sub-steps that aim to provide the export of the second information 12 towards computerised tools (not shown) that are used for engineering and configuring the second DCS. Obviously, this allows obtaining a further remarkable reduction of the needed amount of human work.

The following sub-steps are preferably included:
- storing the second information into fourth storage means 22, included in the computerised environment 12;
- acquiring the second information 11 from the fourth storage means 22;
- storing the second information 11 into fifth storage means 23 that are included in second computerised tools (not shown) used for engineering and configuring the second DCS.

The method according to the present invention has proven to be of easy practical implementation.

In fact, the computerised environment 12 can be considered as a computerised framework for implementing the method according to the present invention.

In practice, the computerised environment 12 can be realised using computerised tools that are available in the state of the art. Particularly, a personal computer running a suitable multitasking operating system provided with windowing GUI (Graphical User Interface) capabilities might be used. Moreover, a Java virtual machine adapted for said multitasking operating system might be also advantageously used.

In a preferred embodiment of the method, according to the present invention, one or more of the described phases/steps can be activated, according to adjustable sequences, by first computerised means (not shown), included in the computerised environment 12. The first computerised means can be represented, for example, by a first suitable programmable computerised interface, which makes the computerised environment 12 to the user.

This embodiment is particularly advantageous because the user can manage all the transitions of the information during the process flow. In particular, the various phases/steps of the method, according to the present invention, can be performed according to sequences that can be set by the user, according to the needs. This fact implies remarkable advantages in terms of flexibility and applicability of the method according to the present invention.

These advantages can also be increased, taking in consideration another possible embodiment of the method according to the present invention. According to this embodiment, the computerised environment 12 comprises second computerised means (not shown) for logging the sequence of transitions to which a selected information item is subjected during one or more of said phases/steps.

Obviously, the mentioned information item can be related to a certain aspect of the first or the second or the virtual DCS and therefore it can be selected from said first information and/or from said second information and/or from said third information.

In practice, the second computerised means allows selecting an information item according to a predefined set of descriptive attributes, Then, once the information item is selected, the second computerised means allows building data structures that keep track of the transitions to which said information item is subjected. For example, said data structures can comprise "transition graphs" that allow describing the complete transition story of the selected item. Obviously, said transition graphs are advantageously accessible to the user, who can modulate, through the second computerised means, the scope and the extension of the tracing activity.

Also the second computerised means are of easy practical implementation. They can be represented, for example, by a second suitable programmable computerised interface running in the computerised environment 12.

The method, according to the present invention, is susceptible of numerous modifications and variations, all of which are within the scope of the inventive concept. All the details may furthermore be replaced with other technically equivalent elements.

## Claims

1. A method for converting first information having a first format provided with a first syntax and with a first semantics for describing the hardware/software configuration of a first distributed control system, into second information having a second format provided with a second syntax and with a second semantics for describing the hardware/software configuration of a second distributed control system, said method comprising the phases of:
a) converting said first information into third information having a third format provided with a third syntax and with a third semantics for describing the hardware/software configuration of a virtual distributed control system, said virtual distributed control system having hardware/software configuration independent of the hardware/software configuration of said first distributed control system and said second distributed control system; and
b) converting said third information into said second information;
**characterised in that**:
- said phase a) comprises a plurality of steps for converting said first syntax into said third syntax and for converting said first semantics into said third semantics respectively; and/or
- said phase b) comprises a plurality of steps for converting said third semantics into said second semantics and for converting said third syntax into said second syntax respectively.

2. A method, according to the claim 1, **characterised in that** said phase a) comprises a plurality of steps for converting, in a first period of time, said first syntax into said third syntax and for converting, in a second period of time separated from said first period of time, said first semantics into said third semantics.

3. A method, according to the claim 2, **characterised in that** said second period of time is subsequent to said first period of time.

4. A method, according to one or more of the previous claims, **characterised in that** said phase b) comprises a plurality of steps for converting, in a third period of time, said third semantics into said second semantics and for converting, in a fourth period of time separated from said third period of time, said third syntax into said second syntax.

5. A method, according to the claim 4, **characterised in that** said fourth period of time is subsequent to said third period of time.

6. A method, according to one or more of the previous claims, **characterised in that** said phase a) comprises the following first plurality of steps:
a.1) importing said first information into a computerised environment;
a.2) converting said first information into a first intermediate information having a first intermediate format provided with said third syntax and with said first semantics;
a.3) storing said first intermediate information into first intermediate storage means, said first intermediate storage means being included in said computerised environment;
a.4) acquiring said first intermediate information from said first intermediate storage means;
a.5) converting said first intermediate information into said third information;
a.6) storing said third information into first storage means, said first storage means being included in said computerised environment.

7. A method, according to claim 6, **characterised in that** said step a.1) comprises the following sub-steps:
- acquiring said first information from second storage means, said second storage means being included in first computerised tools used for engineering and configuring said first distributed control system; and
- storing said first information into third storage means, said third storage means being included in said computerised environment; and
- acquiring said first information from said third storage means.

8. A method, according to one or more of the previous claims, **characterised in that** said phase b) comprises the following second plurality of steps:
b.1) acquiring said third information from said first storage means; and
b.2) converting said third information into a second intermediate information having a second intermediate format provided with said third syntax and said second semantics;
b.3) storing said second intermediate information into second intermediate storage means, said second intermediate storage means being included in said computerised environment;
b.4) acquiring said second intermediate information from said second intermediate storage means;
b.5) converting said second intermediate information into said second information;
b.6) exporting said second information out of said computerised environment.

9. A method, according to the claim 8, **characterised in that** said step b.6) comprises the following sub-steps:
- storing said second information into fourth storage means, said fourth storage means being included in said computerised environment;
- acquiring said second information from said fourth storage means;
- storing said second information into fifth storage means, said fifth storage means being included in second computerised tools used for engineering and configuring said second distributed control system.

10. A method, according to one or more of the previous claims, **characterised in that** said third information describes the hardware/software configuration of said virtual distributed control system through the combination of sets of information, said sets of information comprising pieces of information related to non-overlapping aspects of the hardware/software configuration of said virtual distributed control system.

11. A method, according to one or more of the previous claims, **characterised in that** said computerised environment comprises first computerised means for activating said first plurality of steps and/or said second plurality of steps.

12. A method, according to one or more of the previous claims, **characterised in that** said computerised environment comprises second computerised means for logging the sequence of transitions to which a selected information item is subjected during said first sequence of steps and/or said second sequence of steps.

13. A method, according to claim 12, **characterised in that** said information item is selected from said first information and/or from said second information and/or from said third information.

14. A method, according to claims 12 and 13 **characterised in that** said second computerised means build one or more data structures for keeping track of the transitions to which said information item is subjected.

15. A method, according to claim 14 **characterised in that** said data structures comprise one or more transition graphs, visible to the user.

16. A computerised tool, **characterised in that** it implements a method for converting first information having a first format provided with a first syntax and with a first semantics for describing the hardware/software configuration of a first distributed control system, into second information having a second format provided with a second syntax and with a second semantics for describing the hardware/software configuration of a second distributed control system, according to one or more of the previous claims.
